# EUROPEAN PATENT APPLICATION

(11) **EP 4 258 031 A1**
(43) Date of publication of application: **11.10.2023**
(21) Application number: 23155341.3
(22) Date of filing: 07.02.2023
(51) Int. Cl.: G02B 6/42

(54) **BUTT-COUPLED AVALANCHE PHOTODIODE**

(30) Priority: 08.04.2022 EP 22305498; 23.11.2022 US 202217993410
(71) Applicant: Viavi Solutions Inc., Chandler, AZ 85286 (US)
(72) Inventor: LECOEUCHE, Vincent, 42660 Tarentaise (FR)
(74) Representative: Murgitroyd & Company

(57) **Abstract**

In some examples, butt-coupling an avalanche photodiode may include coupling an optical fiber to an avalanche photodiode by butt-coupling the optical fiber to the avalanche photodiode. A face of the optical fiber may include a specified angle relative to and/or a specified distance from an active area of a chip associated with the avalanche photodiode. Further, the specified angle and/or the specified distance may be specified to minimize a tailing associated with an incident light beam from the optical fiber.

## Description

### BACKGROUND

An avalanche photodiode (APD) may be described as a semiconductor photodiode detector. The APD may convert light into electricity by utilizing the photoelectric effect. An APD may be utilized in fiber optic communication systems as a photo detector. In this regard, an APD may include a relatively high sensitivity, and also a relatively high internal gain.

### SUMMARY OF THE DISCLOSURE

According to a first aspect of the present disclosure there is provided a butt-coupled avalanche photodiode comprising: an avalanche photodiode; and an optical fiber, wherein the optical fiber is butt-coupled to the avalanche photodiode.

The optical fiber includes a face that may include an angle of less than approximately 85º and greater than approximately 70º relative to a central axis of the optical fiber. An active area of a chip associated with the avalanche photodiode may be positioned at an angle of greater than approximately 93º and less than approximately 98º relative to a central axis of the optical fiber, or the active area of the chip associated with the avalanche photodiode may be positioned at an angle of greater than approximately 97º and less than approximately 110º relative to the central axis of the optical fiber. The optical fiber may include an angled face, and wherein an active area of a chip associated with the avalanche photodiode is positioned at an angle relative to the angled face to permit, for an incident light beam from the optical fiber, redirection, away from the active area of the chip, of the incident light beam that is first reflected onto the avalanche photodiode and secondly reflected onto an optical fiber surface. The optical fiber may be index-matched relative to an active area of a chip associated with the avalanche photodiode. The optical fiber may include an intermediate pin-hole to truncate a Gaussian beam relative to an active area of a chip associated with the avalanche photodiode. For a 30µm wide chip associated with the avalanche photodiode, a core of the optical fiber may be disposed at less than 20µm from an active area of the chip, or approximately 20µm from the active area of the chip. For a 50µm wide chip associated with the avalanche photodiode, the optical fiber includes a face that may be disposed at less than 40µm from an active area of the chip, or approximately 40µm from the active area of the chip.

According to a second aspect of the present disclosure there is provided a butt-coupled avalanche photodiode comprising: an avalanche photodiode; and an optical fiber, wherein the optical fiber is butt-coupled to the avalanche photodiode, and wherein a face of the optical fiber includes at least one of a specified angle relative to or a specified distance from an active area of a chip associated with the avalanche photodiode to minimize a tailing associated with an incident light beam from the optical fiber.

The face of the optical fiber may include the specified angle of less than approximately 85º and greater than approximately 70º relative to a central axis of the optical fiber. The active area of the chip associated with the avalanche photodiode may be positioned at an angle of greater than approximately 93º and less than approximately 98º relative to a central axis of the optical fiber, or the active area of the chip associated with the avalanche photodiode may be positioned at an angle of greater than approximately 97º and less than approximately 110º relative to the central axis of the optical fiber. The at least one of the specified angle or the specified distance may permit, for the incident light beam from the optical fiber, redirection, away from the active area of the chip, of the incident light beam that is first reflected onto the avalanche photodiode and secondly reflected onto an optical fiber surface. The optical fiber may be index-matched relative to the active area of the chip associated with the avalanche photodiode. The optical fiber may include an intermediate pin-hole to truncate a Gaussian beam relative to the active area of the chip associated with the avalanche photodiode.

According to a third aspect of the present disclosure there is provided a method for butt-coupling an avalanche photodiode comprising: coupling an optical fiber to an avalanche photodiode by butt-coupling the optical fiber to the avalanche photodiode, wherein a face of the optical fiber includes at least one of a specified angle relative to or a specified distance from an active area of a chip associated with the avalanche photodiode; and specifying the at least one of the specified angle or the specified distance to minimize a tailing associated with an incident light beam from the optical fiber.

The method may further comprise: specifying the face of the optical fiber to include the specified angle of less than approximately 85º and greater than approximately 70º relative to a central axis of the optical fiber. The method may further comprise: positioning the active area of the chip associated with the avalanche photodiode at an angle of greater than approximately 93º and less than approximately 98º relative to a central axis of the optical fiber; or positioning the active area of the chip associated with the avalanche photodiode at an angle of greater than approximately 97º and less than approximately 110º relative to the central axis of the optical fiber. The method may further comprise: specifying the at least one of the specified angle or the specified distance to permit, for the incident light beam from the optical fiber, redirection, away from the active area of the chip, of the incident light beam that is first reflected onto the avalanche photodiode and secondly reflected onto an optical fiber surface. The method may further comprise: index-matching the optical fiber relative to the active area of the chip associated with the avalanche photodiode. The method may further provide: implementing, for the optical fiber, an intermediate pin-hole to truncate a Gaussian beam relative to the active area of the chip associated with the avalanche photodiode.

### BRIEF DESCRIPTION OF DRAWINGS

Features of the present disclosure are illustrated by way of example and not limited in the following figure(s), in which like numerals indicate like elements, in which:
Figure 1 illustrates a top view and a right side view of a layout of a butt-coupled avalanche photodiode (APD), in accordance with an example of the present disclosure;
Figure 2 illustrates a Gaussian profile at a fiber tip, in accordance with an example of the present disclosure;
Figure 3 illustrates fiber mode profiles versus an ideal Gaussian profile, in accordance with an example of the present disclosure;
Figures 4A-4C respectively illustrate an angle/air gap implementation with opposed angles, an index-matched implementation, and an intermediate pin-hole implementation of the butt-coupled avalanche photodiode of Figure 1, in accordance with an example of the present disclosure;
Figure 5 illustrates a graph including a tailing example, in accordance with an example of the present disclosure;
Figure 6 illustrates a graph of a numerical simulation showing integrated optical power in the vicinity of a ring (5µm) for various incidence angles of a chip and an associated distance from the chip, in accordance with an example of the present disclosure; and
Figure 7 illustrates a graph of a numerical simulation showing worst-case reflectance of a pigtailed assembly for various incidence angles of a chip and an associated distance from the chip, in accordance with an example of the present disclosure.

### DETAILED DESCRIPTION

For simplicity and illustrative purposes, the present disclosure is described by referring mainly to examples. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on. The term "optical fiber" may be generalized to an optical waveguide of any type. A "telecom" singlemode fiber may be generally assumed but the principles may be generalized to other types of singlemode fibers, for example at different wavelengths, and to multimode fibers, with values for diameters and distances of elements that would need to be rescaled accordingly.

A butt-coupled avalanche photodiode (APD), and a method for butt-coupling an APD are disclosed herein. The butt-coupled APD and method for butt-coupling an APD disclosed herein provide a specific alignment procedure for an APD for an improved temporal response.

In reflectometry, after an intense event such as Fresnel reflection on a probe pulse, low level of light (e.g., Rayleigh scattering) may need to be adequately measured. For example, situations where the power level of light to be measured is 50dB less intense than the intense event that precedes may be relatively common. An APD may be TO-canned with a lens and an optical fiber may be positioned to maximize a signal from the fiber to the APD. In this regard, an APD recovery time may represent a parameter that may need to be improved for improvement in measurement of the low level of light.

The butt-coupled APD and method for butt-coupling an APD disclosed herein provide for improvement in measurement of the low level of light. Yet further, the direct butt-coupling at a correct position may improve the APD performance as the original beam quality (e.g., of the fiber mode) may be better maintained. In this regard, the APD's tailing may be created by illumination at the periphery of the active area. Further propagation of the beam within the APD structure, with associated beam divergence and internal reflections may further result in undesirable illumination at the periphery of the active area. As a general rule, a spot with a width of approximately -40 to -60dB may be maintained at the anode ring level.

According to examples disclosed herein, the butt-coupled APD and method for butt-coupling an APD disclosed herein may utilize a flat fiber-end to maintain the Gaussian mode quality (e.g., either cleaved or polished, possibly angled or non-angled with index matching material, possibly coated with an anti-reflective thin film deposit).

According to examples disclosed herein, for the butt-coupled APD and method for butt-coupling an APD disclosed herein, the fiber may be a trench-assisted fiber as the fundamental mode may be as close as possible to the Gaussian mode structure.

According to examples disclosed herein, the butt-coupled avalanche photodiode may include an avalanche photodiode, and an optical fiber. The optical fiber may be butt-coupled to the avalanche photodiode.

For the butt-coupled avalanche photodiode described above, an index-matching material may be inserted between the optical fiber and the avalanche photodiode. The two possible configurations may be referred to hereafter as the index-matched configuration or the air-gap configuration. The index-matched configuration may reduce reflections, while the air-gap configuration may need to rely on element angles to move away undesirable reflections.

For the butt-coupled avalanche photodiode described above, and the index-matched configuration, the optical fiber may include a face that includes an angle of approximately 90º relative to a central axis of the optical fiber. For the butt-coupled avalanche photodiode described above, and the air-gap configuration, the optical fiber may include a face that includes an angle of less than approximately 85° and greater than 70° relative to a central axis of the optical fiber.

For the butt-coupled avalanche photodiode described above, and the index-matched configuration, an active area of a chip associated with the avalanche photodiode may be positioned at an angle of greater than approximately 93º and less than approximately 98º relative to the central axis of the optical fiber. For the butt-coupled avalanche photodiode described above, and the air-gap configuration, an active area of a chip associated with the avalanche photodiode may be positioned at an angle of greater than approximately 97º and less than approximately 110º relative to the central axis of the optical fiber.

For the butt-coupled avalanche photodiode described above, and the air-gap configuration, the optical fiber may include an angled face. In this regard, an active area of a chip associated with the avalanche photodiode may be positioned at an angle relative to the angled face to permit, for an incident light beam from the optical fiber, the redirection, away from the active area of the chip, of the light beam that is first reflected onto the photodiode and secondly reflected onto the optical fiber surface. The anti-reflection coatings either on the chip or the fiber tip may be modified in order to mitigate the problem and lower the angle and chip to fiber distance in the air-gap configuration.

For the butt-coupled avalanche photodiode described above, the optical fiber may include an intermediate pin-hole to truncate a Gaussian beam relative to an active area of a chip associated with the avalanche photodiode. Alternatively, that pin-hole may be deposited during the chip manufacturing process.

For the butt-coupled avalanche photodiode described above, for a 30µm wide chip associated with the avalanche photodiode, and the index-matched configuration, the core of the optical fiber may be disposed at less than 20µm from an active area of the chip and down to contact with the chip. For the butt-coupled avalanche photodiode described above, for a 30µm wide chip associated with the avalanche photodiode, and the air-gap configuration, the core of the optical fiber may be disposed at approximately 20µm from an active area of the chip.

For the butt-coupled avalanche photodiode described above, for a 50µm wide chip associated with the avalanche photodiode, and the index-matched configuration, the optical fiber may include a face that is disposed at less than 40µm from an active area of the chip. For the butt-coupled avalanche photodiode described above, for a 50µm wide chip associated with the avalanche photodiode, and the air gap configuration, the optical fiber may include a face that is disposed at approximately 40µm from an active area of the chip.

According to examples disclosed herein, a butt-coupled avalanche photodiode may include an avalanche photodiode, and an optical fiber. The optical fiber may be butt-coupled to the avalanche photodiode. A face of the optical fiber may include a specified angle relative to and/or a specified distance from an active area of a chip associated with the avalanche photodiode to minimize a tailing associated with an incident light beam from the optical fiber.

According to examples disclosed herein, a method for butt-coupling an avalanche photodiode may include coupling an optical fiber to an avalanche photodiode by butt-coupling the optical fiber to the avalanche photodiode. A face of the optical fiber may include a specified angle relative to and/or a specified distance from an active area of a chip associated with the avalanche photodiode. The method may further include specifying the specified angle and/or the specified distance to minimize a tailing associated with an incident light beam from the optical fiber.

The method described above may further include specifying, for the index-matched configuration, the face of the optical fiber to include the specified angle of approximately 90º relative to a central axis of the optical fiber. Further, for the air-gap configuration, the face of the optical fiber may include the specified angle of less than approximately 85° and greater than 70° relative to the central axis of the optical fiber.

The method described above may further include positioning, for the index-matched configuration, the active area of the chip associated with the avalanche photodiode at an angle of greater than approximately 93º and less than approximately 98º relative to the central axis of the optical fiber. Further, the method described above may further include positioning, for the air-gap configuration, the active area of the chip associated with the avalanche photodiode at an angle of greater than approximately 97º and less than approximately 110º relative to the central axis of the optical fiber.

The method described above may further include specifying the specified angle and/or the specified distance to permit, for the incident light beam from the optical fiber, the redirection, away from the active area of the chip, of the light beam that is first reflected onto the photodiode and secondly reflected onto the optical fiber surface.

The method described above may further include index-matching the optical fiber relative to the active area of the chip associated with the avalanche photodiode.

The method described above may further include implementing, for the optical fiber, an intermediate pin-hole to truncate a Gaussian beam relative to the active area of the chip associated with the avalanche photodiode.

With respect to connection of a fiber to an APD, one technique may include a lensed-TO-can assembly. With respect to the lensed-TO-can assembly, examples of aberrations may include under-corrected spherical aberrations, coma, astigmatism, and chromatic aberrations.

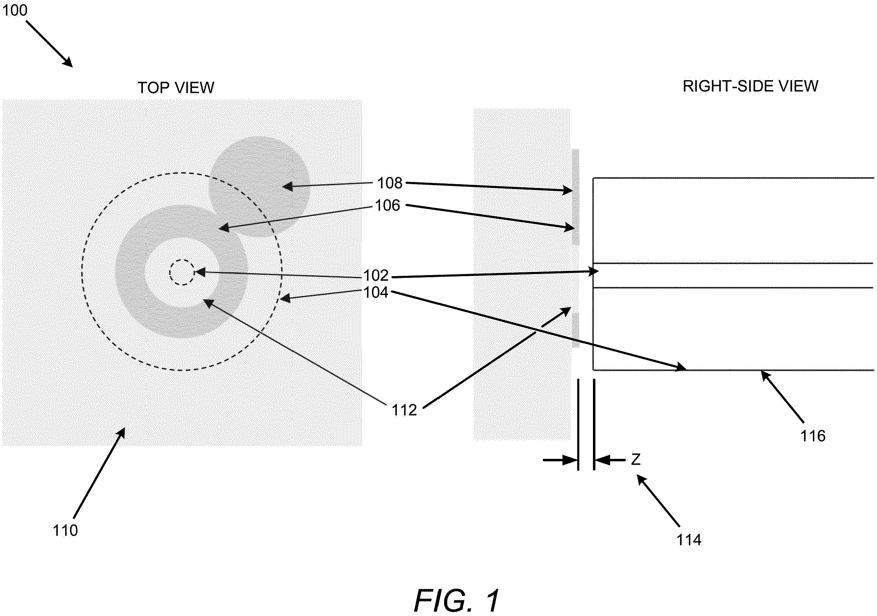

Figure 1 illustrates a layout of a top view and a right side view of a butt-coupled avalanche photodiode 100, in accordance with an example of the present disclosure.

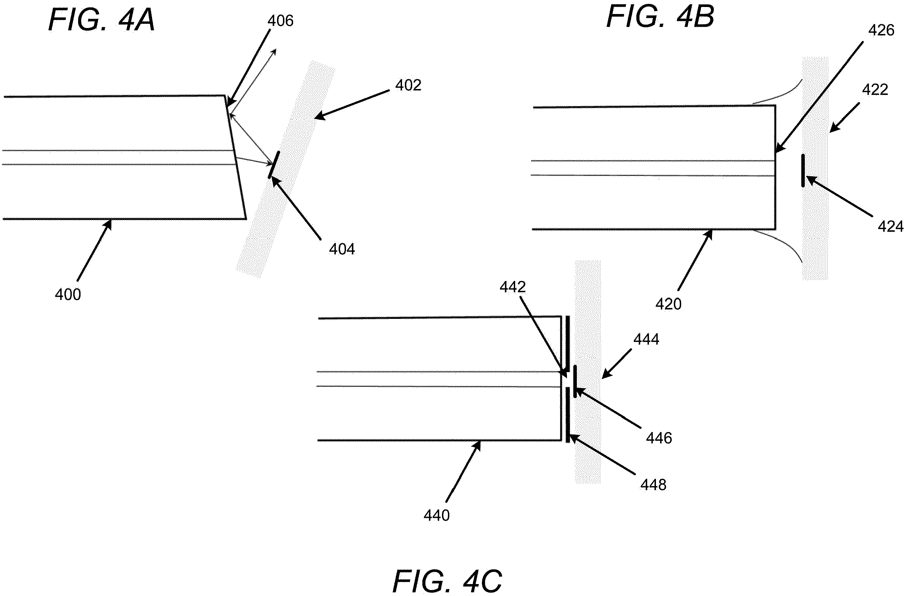

Referring to Figure 1, the butt-coupled avalanche photodiode 100 may include an APD active area 112. Fiber core (-waist diameter) is shown at 102, and optical cladding is shown at 104. Further, an anode ring 106 and a bonding pad 108 may be utilized for bonding the APD to electronic circuitry (not shown) to control operation of the APD. Depending on the bonding pad distance to active area, the bonding may be arranged so as to allow the approach of the fiber, which may require a ball bonding procedure, or a thermo-compressive bonding to minimize the height of the bonding in the area covered by the optical cladding 104. A chip 110 may include the active area 112. The fiber to APD coupling as implemented by the butt-coupling, and by the angle/air gap implementations as disclosed herein with respect to Figures 4A-4C may be implemented to avoid any (or limited) light at the anode ring, where such light may result in a tailing effect that is to be reduced as disclosed herein.

For the example of Figure 1, the power level at ring 106 may be specified at 50dB below center (1/100,000). For a 30µm active area of a chip 110 that is 250µm × 250µm, free-space divergence and a 50dB objective may impose Z<35µm (e.g., at 114) between fiber 116 and active area 112 of chip 110. For a 50µm active area of chip 110, free-space divergence and a 50dB objective may impose Z<80µm between fiber 116 and active area 112 of chip 110.

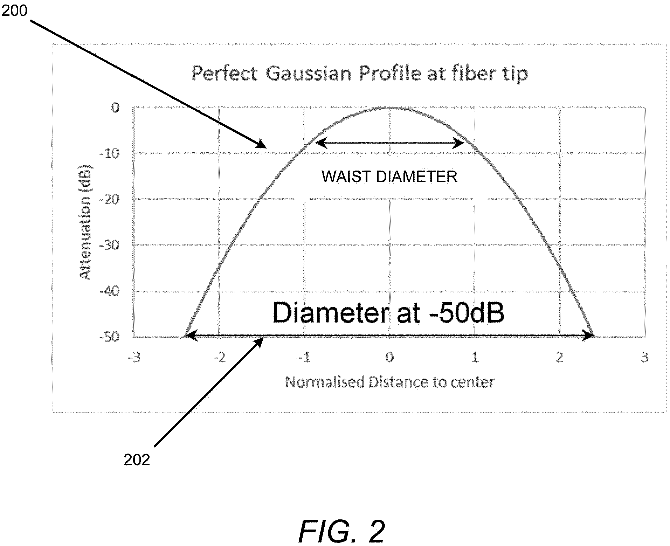

Figure 2 illustrates a Gaussian profile at a fiber tip, in accordance with an example of the present disclosure.

Referring to Figure 2, the Gaussian profile at a fiber tip shows a fiber diameter range at 200 (taken at exp(-2) or -8.78dB), and a range for a fiber diameter at -50dB at 202.

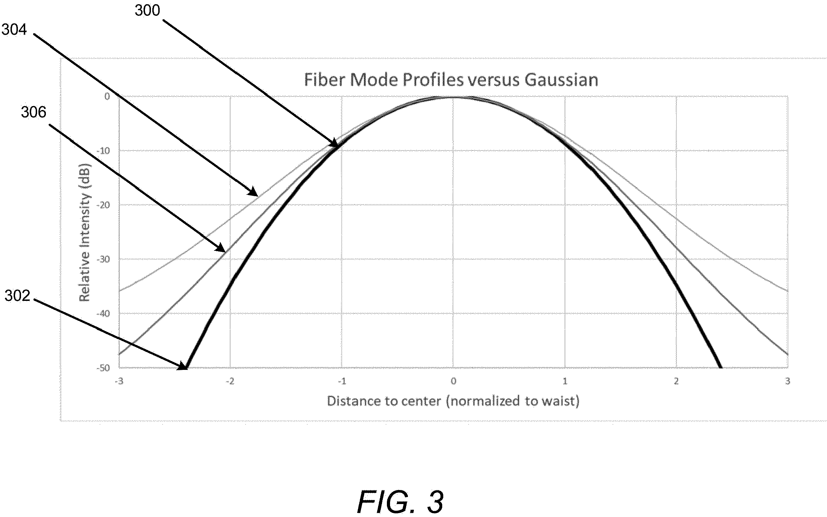

Figure 3 illustrates fiber mode profiles versus an ideal Gaussian profile, in accordance with an example of the present disclosure.

With respect to Figure 3, different types of profiles may include a trench-assisted step index structure, a modeled fundamental mode power percentage as a function of distance to center (normalized to beam waist radius), and an equivalent step index. In this regard, the trench-assisted step index structure may be closer to the ideal Gaussian profile. As the distance to center increases, the power percentage may depart from the ideal Gaussian profile, and thus the trench-assisted step index structure provides a closer profile to the ideal Gaussian profile. Thus, a good fiber to APD coupling may be implemented to avoid any (or limited) light at the ring (e.g., at 106 of Figure 1), which may result in a tailing effect that is to be reduced as disclosed herein.

Referring to Figure 3, the beam waist (taken at exp(-2) or -8.78dB at 300) may generally correspond to fiber core diameter. At 302, the -50dB diameter is 2.4 times larger. In this regard, the trench-assisted design may achieve closer to Gaussian profile than a standard step index. Figure 3 shows that a fiber mode is never perfectly Gaussian in that the width at -50dB of a step-index (e.g., at 304) is quite broad, while a trench assisted fiber (e.g., at 306) achieves closer to the Gaussian profile.

Figures 4A-4C respectively illustrate an angle/air gap implementation with opposed angles, an index-matched implementation, and an intermediate pin-hole implementation of the butt-coupled avalanche photodiode of Figure 1, in accordance with an example of the present disclosure.

Referring to Figure 4A, a fiber 400 may be disposed at an angle relative to chip 402 that includes active area 404. In one example, the angles may be opposed. Angled face 406 relative to the angle of the chip 402 as shown may also provide an air gap. If the angles of face 406 relative to the angle of the chip 402 have the same sign, the reflectance into the fiber 400 may be lower as it would add refraction to the incidence angle. However, the twice-reflected beam from the fiber 400 may not be displaced as much out of the active area 404.

Referring to Figure 4B, a fiber 420 may be index-matched relative to chip 422 that includes active area 424. The index-matching may be implemented, for example, by utilizing index-matching epoxy. The index-matching may provide for no reflections at face 426, and low reflectance at active area 424 of the chip 422. In some examples, the chip 422 may also be angled (in a similar manner as Figure 4A) relative to the face 426.

Referring to Figure 4C, a fiber 440 may include an intermediate pin-hole 442 (e.g., aperture) for truncation of a Gaussian beam relative to chip 444 that includes active area 446. The pin-hole 442 may operate as a mask to effectively cut (e.g., truncate) the Gaussian profile (e.g., at -8.78dB in the graph of Figure 3) to eliminate the Gaussian profile beyond the cut range. In some examples, the pin-hole 442 may be in the range of 10-20 µm. The pin-hole 442 formed by mask 448 may be implemented by depositing onto the fiber 440, depositing on the chip 444, or provided otherwise.

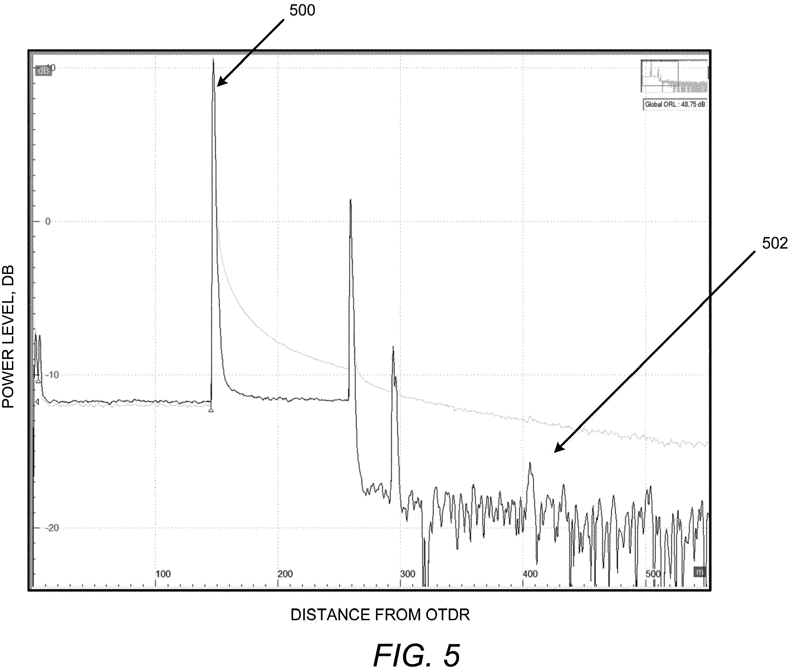

Figure 5 illustrates a graph including a tailing example, in accordance with an example of the present disclosure.

Referring to Figure 5, the OTDR trace shows a tailing example on a highly reflective event under two illumination conditions (5xLOG scale intensity vs. distance), on a relatively sensitive photodiode. The primary optical power may be within the sensitive area in both cases, as may be seen from the similar power level in the first 140m of the trace. The OTDR measurement results of Figure 5 show peak power at 500, and tailing at 502. The tailing at 502 may be eliminated by the butt-coupling and by the angle/air gap implementations as disclosed herein with respect to Figures 4A-4C.

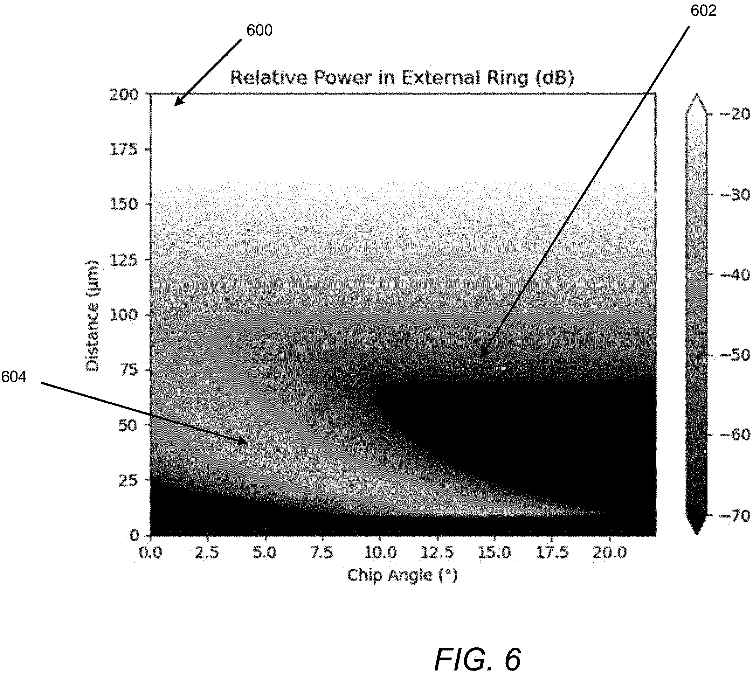

Figure 6 illustrates a graph of a numerical simulation showing integrated optical power in the vicinity of a ring (5µm) for various incidence angles of a chip and an associated distance from the chip, in accordance with an example of the present disclosure.

Referring to Figure 6, the numerical simulation shows the integrated optical power in the vicinity of the ring (e.g., 5µm) for various incidence angle on chip and distance (e.g., the configuration of Figure 4A). The fiber-end angle may be fixed at 11 °. The coma at 604 at short distance/small angle may be due to the twice-reflected beam passing over the ring. This effect may disappear with the index-matched configuration (e.g., Figure 4B). The graph of Figure 6 may be utilized to set a chip angle and fiber distance from a chip active area. For example, at a distance of 200µm as shown at 600, the relative power in the external ring is approximately -20dB. However, at approximately 75µm (as well as below 75µm) at 602, the relative power in the external ring is approximately -50dB, and thus the power is primarily in the active area of the chip (thus minimizing the tailing as disclosed herein). In this manner, the chip angle and fiber distance may be varied as needed to determine an ideal spot of good tailing response and low reflectivity.

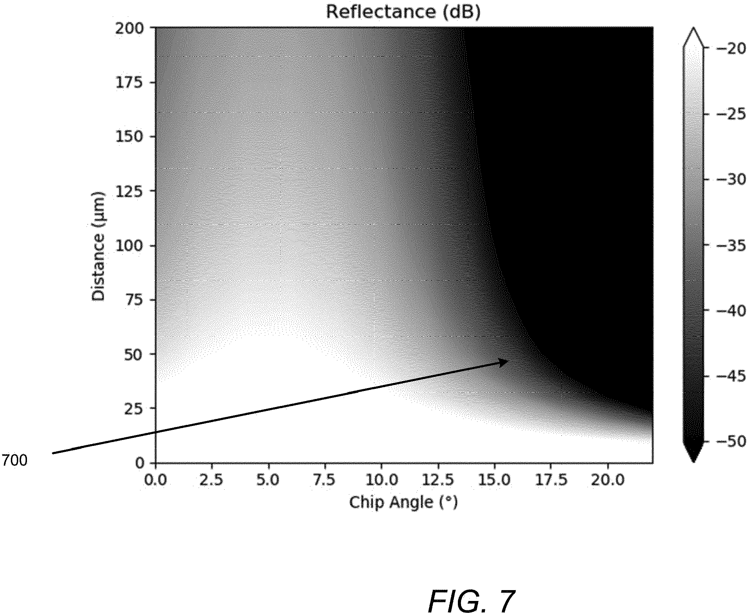

Figure 7 illustrates a graph of a numerical simulation showing worst-case reflectance of a pigtailed assembly for various incidence angles of a chip and an associated distance from the chip, in accordance with an example of the present disclosure.

Referring to Figure 7, the numerical simulation shows the worst-case reflectance of a pigtailed assembly for various incidence angles on chip and distances. The fiber-end angle may be fixed at 11°. In a similar manner as Figure 6, the two simulations determine an ideal spot of good tailing response and low reflectivity around 50µm distance and 15° incidence as shown at 700.

What has been described and illustrated herein is an example along with some of its variations. The terms, descriptions and figures used herein are set forth by way of illustration only and are not meant as limitations. Many variations are possible within the spirit and scope of the subject matter, which is intended to be defined by the following claims -- and their equivalents -- in which all terms are meant in their broadest reasonable sense unless otherwise indicated.

## Claims

1. A butt-coupled avalanche photodiode comprising:
an avalanche photodiode; and
an optical fiber, wherein the optical fiber is butt-coupled to the avalanche photodiode.

2. The butt-couple avalanche diode according to claim 1, wherein a face of the optical fiber includes at least one of a specified angle relative to or a specified distance from an active area of a chip associated with the avalanche photodiode to minimize a tailing associated with an incident light beam from the optical fiber.

3. The butt-coupled avalanche photodiode according to claim 1 or claim 2, wherein the optical fiber includes a, or the, face that includes an angle, or the specified angle, of less than approximately 85º and greater than approximately 70º relative to a central axis of the optical fiber.

4. The butt-coupled avalanche photodiode according to claim 1 or claim 2, wherein an, or the, active area of a chip associated with the avalanche photodiode is positioned at an angle of greater than approximately 93º and less than approximately 98º relative to a central axis of the optical fiber, or
an, or the, active area of the chip associated with the avalanche photodiode is positioned at an angle of greater than approximately 97º and less than approximately 110º relative to the central axis of the optical fiber.

5. The butt-coupled avalanche photodiode according to claim 1, wherein the optical fiber includes an angled face, and wherein an active area of a chip associated with the avalanche photodiode is positioned at an angle relative to the angled face to permit, for an incident light beam from the optical fiber, redirection, away from the active area of the chip, of the incident light beam that is first reflected onto the avalanche photodiode and secondly reflected onto an optical fiber surface.

6. The butt-coupled avalanche photodiode according to claim 1 or claim 2, wherein the optical fiber is index-matched relative to an active area of a chip associated with the avalanche photodiode.

7. The butt-coupled avalanche photodiode according to claim 1 or claim 2, wherein the optical fiber includes an intermediate pin-hole to truncate a Gaussian beam relative to an active area of a chip associated with the avalanche photodiode.

8. The butt-coupled avalanche photodiode according to claim 1, wherein for a 30µm wide chip associated with the avalanche photodiode, a core of the optical fiber is disposed at
less than 20µm from an active area of the chip, or
approximately 20µm from the active area of the chip.

9. The butt-coupled avalanche photodiode according to claim 1, wherein for a 50µm wide chip associated with the avalanche photodiode, the optical fiber includes a face that is disposed at
less than 40µm from an active area of the chip, or
approximately 40µm from the active area of the chip.

10. A method for butt-coupling an avalanche photodiode comprising:
coupling an optical fiber to an avalanche photodiode by butt-coupling the optical fiber to the avalanche photodiode, wherein a face of the optical fiber includes at least one of a specified angle relative to or a specified distance from an active area of a chip associated with the avalanche photodiode; and
specifying the at least one of the specified angle or the specified distance to minimize a tailing associated with an incident light beam from the optical fiber.

11. The method according to claim 10, further comprising:
specifying the face of the optical fiber to include the specified angle of less than approximately 85º and greater than approximately 70º relative to a central axis of the optical fiber.

12. The method according to claim 15, further comprising:
positioning the active area of the chip associated with the avalanche photodiode at an angle of greater than approximately 93º and less than approximately 98º relative to a central axis of the optical fiber; or
positioning the active area of the chip associated with the avalanche photodiode at an angle of greater than approximately 97º and less than approximately 110º relative to the central axis of the optical fiber.

13. The method according to claim 10, further comprising:
specifying the at least one of the specified angle or the specified distance to permit, for the incident light beam from the optical fiber, redirection, away from the active area of the chip, of the incident light beam that is first reflected onto the avalanche photodiode and secondly reflected onto an optical fiber surface.

14. The method according to claim 10, further comprising:
index-matching the optical fiber relative to the active area of the chip associated with the avalanche photodiode.

15. The method according to claim 10, further providing:
implementing, for the optical fiber, an intermediate pin-hole to truncate a Gaussian beam relative to the active area of the chip associated with the avalanche photodiode.
